Europäisches Patentamt

European Patent Office

Office européen des brevets

(19)

(11) **EP 0 729 012 B1**

(12) **FASCICULE DE BREVET EUROPEEN**

(45) Date de publication et mention
de la délivrance du brevet:
**06.09.2000 Bulletin 2000/36**

(51) Int Cl.7: **G01D 5/353**, H01S 3/06

(21) Numéro de dépôt: **96400342.0**

(22) Date de dépôt: **19.02.1996**

(54) **Capteur à réseau de Bragg photoinscrit à bon rapport signal sur bruit**

Sensor mit photoinduziertem Bragg-Gitter mit gutem Signal-Rauschverhältnis

Photo-induced Bragg-grating sensor with good signal to noise ratio

(84) Etats contractants désignés:
**DE GB IT**

(30) Priorité: **21.02.1995 FR 9501973**

(43) Date de publication de la demande:
**28.08.1996 Bulletin 1996/35**

(73) Titulaire: **COMMISSARIAT A L'ENERGIE
ATOMIQUE
75015 Paris Cédex 15 (FR)**

(72) Inventeurs:
 • **Magne, Sylvain
 92320 Chatillon (FR)**
 • **Ferdinand, Pierre
 78800 Houilles (FR)**

 • **Gaucher, Jean-Claude
 91530 Le Val St. Germain (FR)**

(74) Mandataire: **Dubois-Chabert, Guy et al
BREVATOME
3, rue du Docteur Lanceraux
75008 Paris (FR)**

(56) Documents cités:
 • **ELECTRONICS LETTERS, vol. 29, no. 11, 27 Mai
 1993, pages 964-966, XP000372902 KERSEY A D
 ET AL: "MULTI-ELEMENT BRAGG-GRATING
 BASED FIBRE-LASER STRAIN SENSOR"**
 • **ELECTRONICS LETTERS, vol. 29, no. 1, 7
 Janvier 1993, STEVENAGE GB, pages 112-114,
 XP002005035 A.D.KERSEY ET AL.: "Multiplexed
 bragg grating fibre-laser strain-sensor system
 with mode-locked interrogation"**

## Description

Domaine technique

La présente invention concerne un dispositif de génération, à fort rapport signal-sur-bruit, du signal délivré par un transducteur à réseau de Bragg photo-inscrit dans un guide diélectrique et de multiplexage des transducteurs disposés en série dans un réseau de capteurs.

Etat de la technique

Actuellement, les réseaux de capteurs à fibres optiques sont passifs au sens où ces capteurs ne génèrent pas leur propre rayonnement permettant de transmettre l'information mesurée. De tels réseaux de capteurs à fibres optiques ont fait leur apparition dans la seconde moitié des années 80, il s'agit notamment des réseaux de capteurs de contraintes à fibres optiques avec, le plus souvent, des réseaux de Bragg photo-inscrits comme composants transducteurs de contraintes.

Une des premières architectures de réseau de capteurs publiée utilise une source optique d'une largeur spectrale plus grande que la bande spectrale contenant les spectres des réseaux de Bragg et analyse séquentiellement les longueurs d'onde réfléchies par ces différents transducteurs (références [1] et [2]). Ces transducteurs sont passifs car ils se contentent de réfléchir une faible portion de la lumière incidente.

La conception de capteurs lasers permet d'augmenter considérablement le rapport signal sur bruit de la détection. On estime que les capteurs lasers actifs opérant en continu fournissent des rapports signal sur bruit supérieurs à leurs équivalents passifs de l'ordre de 40 dB à 50 dB (référence [3]).

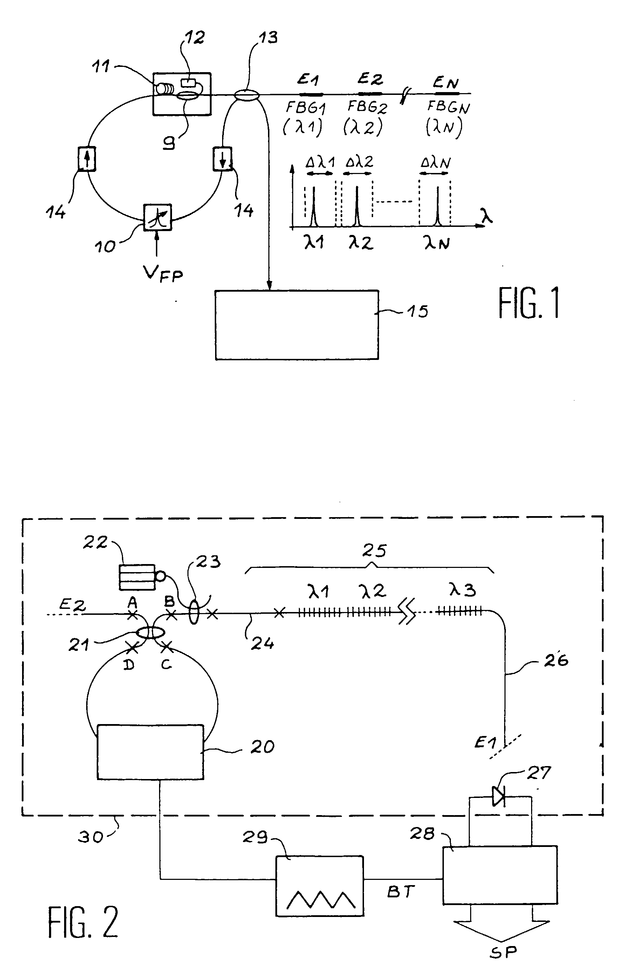

Parmi tous les dispositifs de l'art antérieur, énumérés en tant que références [1], [2], [3] et [9] en fin de description, le document le plus proche de l'invention est référencé [3]. L'architecture proposée par A.D. Kersey et W.W. Morey est un capteur laser à fibre qui consiste en un bras de mesure sur lequel sont photo-inscrits les réseaux de Bragg transducteurs et d'une boucle de rétroaction assurant le retour de l'onde laser, comme représenté sur la figure 1. Sur cette figure sont représentés un interféromètre de Fabry-Perot accordable 10, une fibre dopée erbium 11, une diode laser de pompage 12, un coupleur 13, un coupleur multiplexeur 9, des isolateurs 14, un analyseur de spectres optiques 15, et des éléments senseurs qui sont des réseaux de Bragg FBG1, FBG2, ....., FBGn (FBG : "Fiber Bragg Grating").

En modifiant la tension appliquée à la céramique piézo-électrique de l'interféromètre de Fabry-Perot accordable (voir référence [4]), la fonction de transfert de celui-ci se translate spectralement. L'effet laser se produit lorsque la bande spectrale de transparence de cet interféromètre recouvre la longueur d'onde caractéristique de l'un des réseaux de Bragg. Le signal optique émis par le laser ainsi formé est continu car l'interféromètre n'est pas modulé dans le temps. Ce signal est analysé sur la voie non connectée du coupleur 13 par l'analyseur de spectre 15 qui n'est pas représenté dans la publication [3].

Quatre problèmes sont à résoudre dans le cahier des charges d'un tel réseau de capteurs :

- augmentation de la cadence de mesure ;
- augmentation de la sensibilité (rapport signal sur bruit élevé) ;
- augmentation de la capacité (grand nombre de transducteurs sur la même ligne de mesure) ;
- optimisation du coût du dispositif (économie de moyens).

On peut également mettre en évidence trois limitations inhérentes au dispositif décrit.

■ La première limitation concerne la lecture de la longueur d'onde du réseau de Bragg représentative de l'information à mesurer (température, contraintes, ...). Actuellement, la solution proposée par A.D. Kersey et W.W. Morey (référence [3]) nécessite deux systèmes sélectifs, l'un servant à démultiplexer le capteur (c'est-à-dire, "choisir" le capteur à observer) et l'autre, à lire sa longueur d'onde caractéristique. Cette solution est coûteuse car elle multiplie les éléments optiques de précision : à savoir un interféromètre de Fabry-Perot, un autre dispositif sélectif qui peut également être un deuxième Fabry-Perot, ainsi que deux isolateurs. Dans un contexte industriel d'optimisation du coût (quatrième problème), il est souhaitable de diminuer le nombre d'éléments optiques de précision et de simplifier l'électronique de détection.

■ La seconde limitation tient à la limitation en cadence de mesure induit par la méthode d'analyse (premier problème). En effet, la durée d'acquisition est limitée par la durée d'établissement du régime de fonctionnement continu du laser, mais surtout par l'analyse du spectre optique complet de chaque réseau de Bragg: dans la référence [3], cette analyse est réalisée par un analyseur de spectre optique du commerce.

■  . La troisième limitation est relative à une forte perte d'énergie qui intervient dans la boucle de rétroaction qui fonctionne en retour et non en réflexion. En retour, l'onde parcourt la boucle dans un seul sens du fait de l'insertion des isolateurs et seulement 25 % de l'énergie est renvoyée. De plus, les isolateurs induisent également une perte importante d'énergie (environ 75 % d'absorption). Cette conception optique se traduit par de fortes pertes d'énergie optique nécessitant un pompage plus puissant et impliquant une diminution de la capacité du réseau de capteurs du fait de la diminution de la largeur de bande spectrale du gain assurant l'effet laser (troisième problème).

Par rapport à cette solution de l'art connu, l'invention a pour objet de simplifier la conception de l'optique, la détection électronique ainsi que le traitement du signal, en mettant en jeu moins de composants, tout en étant finalement plus fiable et moins onéreuse.

Exposé de l'invention

La présente invention concerne un dispositif capteur à fort rapport signal-sur-bruit, comprenant au moins un transducteur à réseau de Bragg photo-inscrit sur un guide de diélectrique, une boucle de rétroaction incluant un élément sélectif en longueur d'onde, modulé temporellement, permettant de réaliser un capteur laser déclenché, et un dispositif d'acquisition-échantillonnage, caractérisé en ce que la boucle de rétroaction est constituée d'un interféromètre de Sagnac de type équilibré de sorte qu'il se comporte comme un réflecteur à fibre aux pertes près des composants.

Avantageusement un dispositif capteur à grande capacité selon l'invention comporte plus d'un transducteur à réseau de Bragg à des longueurs d'onde caractéristiques différentes contenues dans la bande spectrale de gain du matériau amplificateur, et le démultiplexage de ces transducteurs ainsi que la mesure de leurs longueurs d'onde caractéristiques sont toutes deux obtenues par le déclenchement laser sélectif engendrant une succession d'impulsions laser de façon séquentielle.

Le principe de ce dispositif consiste à moduler temporellement et de façon continue la fonction de transfert d'un filtre sélectif en longueur d'onde afin de réaliser le démultiplexage et la mesure de la longueur d'onde des réseaux de Bragg transducteurs par déclenchement sélectif de l'effet laser.

Avantageusement l'élément sélectif en longueur d'onde est un interféromètre de Fabry-Perot accordable dont l'intervalle spectral libre est supérieur à la largeur utile de la courbe de gain qui correspond à la bande spectrale de gain du matériau amplificateur suffisante pour déclencher l'effet laser. Le dispositif de l'invention est intégré sous forme "compatible fibre".

Dans une réalisation avantageuse, le dispositif de l'invention comprend un coupleur-multiplexeur, relié en entrée à une diode laser de pompage et à une sortie d'un coupleur 50 % ajustable, dont les deux entrées sont connectées à un interféromètre de Fabry-Perot accordable ; des réseaux de Bragg sont photo-inscrits sur une fibre transductrice (avantageusement germanosilicate) soudée à une fibre amplificatrice (avantageusement germanosilicate) dopée par des ions de terres rares, la fibre transductrice se terminant par un clivage non réflectif (par exemple biseauté). Un modulateur est relié d'une part à l'interféromètre et à un dispositif d'acquisition-échantillonnage délivrant un signal de sortie parallèle correspondant aux valeurs de longueurs d'onde d'accord. Une photodiode recevant le signal laser déclenché est également connectée à ce dispositif d'acquisition-échantillonnage.

Le coupleur-multiplexeur est un coupleur-multiplexeur à fibre conçu pour assurer le couplage du faisceau de pompage issu de la diode laser, tout en assurant la transmissoin du faisceau laser vers la boucle de rétroaction.

Avantageusement le dispositif de l'invention comprend également un système électronique d'acquisition séquentielle des longueurs d'onde d'accord de Bragg. Ce système électronique d'acquisition comprend un amplificateur, relié à la photodiode, suivi d'un comparateur à seuil, un échantillonneur-bloqueur qui reçoit la sortie du comparateur sur son entrée déclenchement et le signal sortant du modulateur sur son entrée signal. Un convertisseur analogique-numérique 14 bits relié à un ordinateur est disposé en sortie de cet échantillonneur-bloqueur, une remise à zéro de l'échantillonneur-bloqueur ayant lieu dès la fin de conversion.

Selon une réalisation avantageuse de l'invention, on utilise une cavité linéaire exploitant une boucle de rétroaction du type interféromètre de Sagnac équilibré, se comportant à l'accord comme un réflecteur 100 % réflectif. On module temporellement le signal de commande d'accord de l'interféromètre de Fabry-Perot, on prélève à l'une des extrémités de la cavité linéaire le signal d'émission laser et l'on échantillonne à cet instant la valeur du signal de commande de l'interféromètre Fabry-Perot. On cumule ainsi les améliorations du rapport signal sur bruit dues respectivement au principe du capteur laser et au fonctionnement du laser en régime déclenché, tout en diminuant le temps de réponse et en simplifiant les circuits. Le dispositif permet également le multiplexage des différents transducteurs en série sur la fibre optique.

Avantageusement, le dispositif de l'invention peut fonctionner également avec un conduit de lumière notamment réalisé en optique intégrée, voire à une propagation à l'air libre de la lumière.

Les avantages principaux du dispositif de l'invention résident dans:

■ L'utilisation d'un seul élément sélectif modulé temporellement, assurant simultanément la fonction de démultiplexage et de dispositif synchronisateur de la prise d'information du signal de modulation représentatif du mesurande. L'électronique d'acquisition est déclenchée par les impulsions laser elles-mêmes. Par contre, dans le cas de la référence [3], comme représenté sur la figure 1, deux systèmes sélectifs sont nécessaires. Les auteurs de ce document analysent un spectre optique complet (toutes les valeurs du signal à toutes les longueurs d'onde du spectre). Dans l'invention, la mesure du signal appliqué au système sélectif de modulation est ponctuelle (c'est-à-dire, la mesure d'une seule valeur).

■ Le laser à fibre formé de la boucle de rétroaction et des réseaux de Bragg fonctionne en mode déclenché, ce qui permet d'obtenir des impulsions très puissantes (supérieures au Watt) assurant une augmentation du rapport signal sur bruit. Par contre dans le cas de la référence [3], le laser opère en continu, le rapport signal sur bruit est donc plus faible.

■ Le mode de fonctionnement impulsionnel procure un temps de réponse de l'ordre de quelques millisecondes par capteur typiquement. Par contre dans la référence [3], le temps de réponse du dispositif est limité par l'acquisition d'un spectre optique continu. De plus le dispositif de l'invention est beaucoup plus rapide (quelques millisecondes par capteur au lieu de quelques secondes).

■ Enfin, les auteurs de la référence [3] exploitent deux isolateurs pour assurer la circulation de l'onde dans un seul sens et affiner le spectre laser. Par contre, la conception du dispositif de l'invention est plus simple, exploitant la propriété réflective de la boucle utilisée comme miroir sélectif. Les deux isolateurs de [3] sont remplacés par un coupleur ajustable réglé de sorte qu'aucune réflexion n'intervienne, excepté à la résonance en transmission permise par le système sélectif accordable (interféromètre de Fabry-Perot, par exemple) pour laquelle la boucle se comporte alors comme un réflecteur à fibre. La proportion d'énergie réfléchie est alors fonction des pertes induites par le système sélectif. Typiquement, une telle boucle réfléchit alors 50 % du signal tandis que la boucle de rétroaction définie dans la référence [3] renvoie moins de 10 % du signal (25 % de transmission des isolateurs et 25 % de retour de la boucle). Dans le dispositif de l'invention, la puissance de pompage est donc plus faible et la capacité du capteur (nombre de transducteurs par ligne de mesure) plus importante.

Avantageusement, le dispositif de l'invention peut être utilisé pour la surveillance de contraintes, ou de températures, dans une structure.

Brève description des dessins

- La figure 1 illustre un dispositif de l'art connu ;
- la figure 2 illustre le dispositif de l'invention ;
- la figure 3 représente des courbes d'absorption et de fluorescence typiques d'un ion de terres rares (cas de l'ion $Yb^{3+}$) ;
- la figure 4 illustre une fonction de transfert spectrale typique d'un interféromètre de Fabry-Perot;
- la figure 5 représente un spectre en transmission du coupleur-multiplexeur illustré sur la figure 2 ;
- la figure 6 illustre la définition du comportement en transmission du coupleur multiplexeur tel que considéré à la figure 5 ;
- la figure 7 illustre le principe de l'interrogation sélective des réseaux de Bragg ;
- la figure 8 illustre un système électronique d'acquisition séquentielle des longueurs d'onde d'accord de Bragg selon l'invention.

Description détaillé de modes de réalisation

Comme représenté sur la figure 2 le dispositif de l'invention est un réseau de capteur laser à fibre déclenché.

Sur cette figure, un coupleur-multiplexeur à fibre 23 est relié en entrée à une diode laser de pompage (fibrée) 22, et à une sortie d'un coupleur 50 % ajustable 21, dont les deux entrées sont connectées à un interféromètre de Fabry-Perot accordable 20. Des réseaux de Bragg 25 sont photo-inscrits sur une fibre 26 soudée à une fibre dopée 24 (par exemple avec des ions de terres-rares) reliée au coupleur-multiplexeur 23, la fibre 26 comportant à son autre extrémité un clivage non réflectif (par exemple biseautée). Un modulateur 29 est relié d'une part à l'interféromètre 20 et à un dispositif d'acquisition-échantillonnage 28, le signal BT étant une base de temps, et le signal SP une sortie numérique parallèle (valeurs de longueurs d'onde d'accord). Une photodiode 27 est également connectée à ce dispositif d'acquisition-échantillonnage 28.

Le signal optique constitué des impulsions laser peut être observé soit à l'extrémité E1 (transmission des réseaux de Bragg), soit à l'extrémité E2 (transmission résiduelle très faible (quelques %) de la boucle de rétroaction due à une légère dissymétrie en énergie aux ponts D et C).

Le dispositif de l'invention consiste à réaliser une cavité linéaire exploitant un réflecteur par exemple de type interféromètre de Sagnac équilibré (couplage équiréparti (50 %) de l'énergie dans les deux branches) de sorte qu'il se comporte comme un réflecteur de fibre 100 % réflectif.

Ce comportement a été appliqué à plusieurs reprises pour réaliser des lasers à fibre. Il fonctionne comme suit: provenant de B, les deux ondes (issues en D et C) parcourent le même chemin optique (au déphasage $\pi/2$ du coupleur près) et se recombinent après parcours dans la boucle pour interférer destructivement au port A et constructivement au port B du coupleur (référence [6]). Cette inversion de comportement (de réflexion en transmission) a déjà été démontrée avec un réseau de Bragg photo-inscrit dans une boucle de rétroaction (référence [7]).

Le fait que toute l'énergie se trouve réfléchie au port B provient du déphasage imposé par le coupleur. La boucle joue ainsi le rôle d'un "miroir" à fibre.

Etant donné le très fort gain des lasers à fibre, de faibles réflexions de l'ordre du % sont susceptibles de déclencher une émission laser incontrôlée. Toute réflexion parasite doit donc être minimisée. Pour cela, le coupleur 21 doit être ajusté précisément à mieux que quelques %. Si cette condition est trop sévère sur la fabrication des coupleurs en série, le coupleur 21 peut être avantageusement choisi ajustable (référence [8]) afin d'autoriser un réglage précis du coefficient de couplage dans la bande de longueur d'onde de gain utile.

L'autre intérêt d'un coupleur ajustable 21 est de pouvoir pallier, par un simple réglage, la dissymétrie des pertes d'insertion dans la cavité de l'interféromètre de Fabry-Perot 20 (les pertes d'insertion sont majoritairement dictées par le couplage dans les fibres, couplage le plus souvent différent pour chacune d'elles).

Lorsque le coupleur 21 est ajusté correctement afin d'assurer la recombinaison des deux faisceaux de même énergie, le fonctionnement de la boucle se trouve inversé en ce qui concerne toutes les longueurs d'onde non transmises par l'interféromètre de Fabry-Perot. Cela signifie que l'énergie n'interfère plus alors constructivement en B mais en A, de sorte qu'aucune résonance laser n'est alors possible en s'assurant que l'onde ne soit pas réfléchie à l'extrémité E2. Il faut donc empêcher toute réflexion parasite à l'extrémité des deux fibres (extrémité E2 de la boucle de rétroaction (point A) et extrémité de la fibre porteuse des réseaux de Bragg (extrémité E1)). Plutôt que de déposer une couche diélectrique antireflet, il est plus simple de polir l'extrémité de chacune de ces fibres en biseau afin de supprimer toute réflexion.

D'une façon générale, la puissance de la diode de pompage 22 est ajustée afin d'obtenir un gain suffisant pour générer des impulsions suffisamment puissantes tout en évitant un effet laser incontrôlé sur les réflexions parasites mentionnées précédemment. Pour la même raison, l'émission spontanée amplifiée en double passage (aller et retour) dans la fibre amplificatrice après réflexions sur les réseaux de Bragg contribue à saturer le gain et à diminuer l'efficacité du laser. La puissance de la diode 22 doit donc être ajustée suivant l'une ou l'autre de ces limitations.

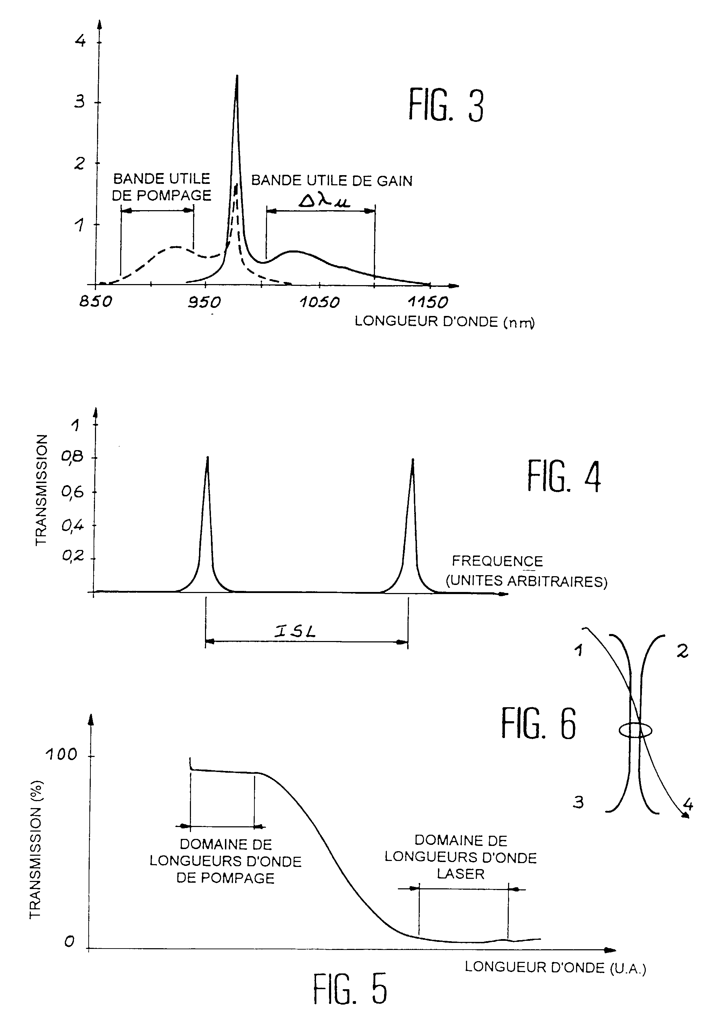

Dans le dispositif selon l'invention, les réseaux de Bragg sont choisis de telle sorte que leurs longueurs d'onde caractéristiques sont contenues dans la bande spectrale de gain du matériau amplificateur. La bande spectrale procurant un gain suffisant pour déclencher l'effet laser est appelée la "bande utile de gain" et est représentée sur la figure 3 pour un ion de terres rares, l'ion ytterbium ($Yb^{3+}$) par exemple. Sur cette figure sont représentées les courbes d'absorption (pointillés) et de fluorescence (traits pleins) typiques d'un tel ion. La courbe de gain utile est située au centre de la distribution de fluorescence et peut contenir jusqu'à 50 capteurs de 2 nm de bande en longueur d'onde. L'effet laser se produit au moment où le filtre accordable qui balaye les longueurs d'onde devient réflectif pour la longueur d'onde d'accord de l'un des réseaux.

Les capteurs laser sont donc observés séquentiellement. Le grand avantage de cette conception de démultiplexage est que le laser fonctionne en mode déclenché. En effet, le capteur laser émet une impulsion consécutive au recouvrement spectral entre la fonction de transfert spectrale du filtre accordable modulé temporellement et celle du réseau de Bragg assurant la rétroaction.

L'émission laser sert de signal de synchronisation et la mise en mémoire des caractéristiques électriques du filtre accordable à cet instant précis donne l'information recherchée.

L'élément sélectif en longueur d'onde peut être, par exemple, un interféromètre de Fabry-Perot accordable dont l'intégration sous forme "compatible fibre" est assurée par plusieurs constructeurs (référence [4]) et est décrite dans de nombreuses publications (référence [5]).

L'interféromètre de Fabry-Perot ne peut être employé que dans une configuration en boucle. Il ne peut pas être employé simplement dans une configuration linéaire car celui-ci filtre spectralement en transmission et non en réflexion, comme représenté sur la figure 4 qui illustre la fonction de transfert spectrale typique d'un interféromètre de Fabry-Perot.

L'interféromètre de Fabry-Perot est choisi de sorte que son intervalle spectral libre (ISL) soit supérieur à la largeur utile de la courbe de gain. Ainsi, un seul pic de transmission est présent, à tout moment, au sein de la courbe de gain, ce qui proscrit tout effet laser simultané à deux longueurs d'onde distinctes espacées de l'intervalle spectral libre. Son taux d'insertion (perte optique induite par le composant, de la fibre d'entrée à la fibre de sortie) est généralement de l'ordre de 2 à 3 dB (50 %).

La finesse de tels interféromètres à fibre (référence [4]) est de l'ordre de 100 à 1000, de sorte que sa largeur de raie spectrale (qui est égale à l'intervalle spectral libre divisé par la finesse) est de l'ordre de 0,1 nm à 0,5 nm environ. Certaines cavités Fabry-Perot (non fibrées) permettent d'atteindre des finesses de l'ordre de 40 000 (Supercavité Newport) permettant d'aboutir à des largeurs spectrales de l'ordre de 0,01 nm environ.

Chaque capteur est identifié par sa longueur d'onde de Bragg contenue dans la bande de gain, comme représenté sur la figure 3, et possède un domaine spectral d'évolution en longueur d'onde représentatif de l'information à mesurer (typiquement, quelques nm d'évolution autour de la longueur d'onde centrale). Le tableau I, donné en fin de description, qui est un exemple de tableau de correspondance des longueurs d'onde de pompage et des longueurs d'onde laser opérationnelles pour les principaux ions de terres-rares d'intérêt, regroupe les principaux ions de terres-rares d'intérêt et leurs bandes spectrales (d'absorption et de gain) permettant de réaliser un tel réseau de capteurs actifs pompés par diode laser. Le domaine spectral de choix de la diode laser est défini par la bande de pompage tandis que la bande de gain correspond au domaine spectral utile de multiplexage. Avantageusement, les ions $Yb^{3+}$ et $Nd^{3+}$ sont utilisés en vertu de leurs très larges bandes de gain autorisant une très grande capacité de multiplexage (très grand nombre de transducteurs de Bragg par ligne de mesure, typiquement, de 30 à 50) et leurs fortes efficacités laser. Dans un autre mode de réalisation de l'invention, on utilisera l'ion $Er^{3+}$ dont la bande de gain est compatible avec les composants optoélectroniques utilisés en télécommunication.

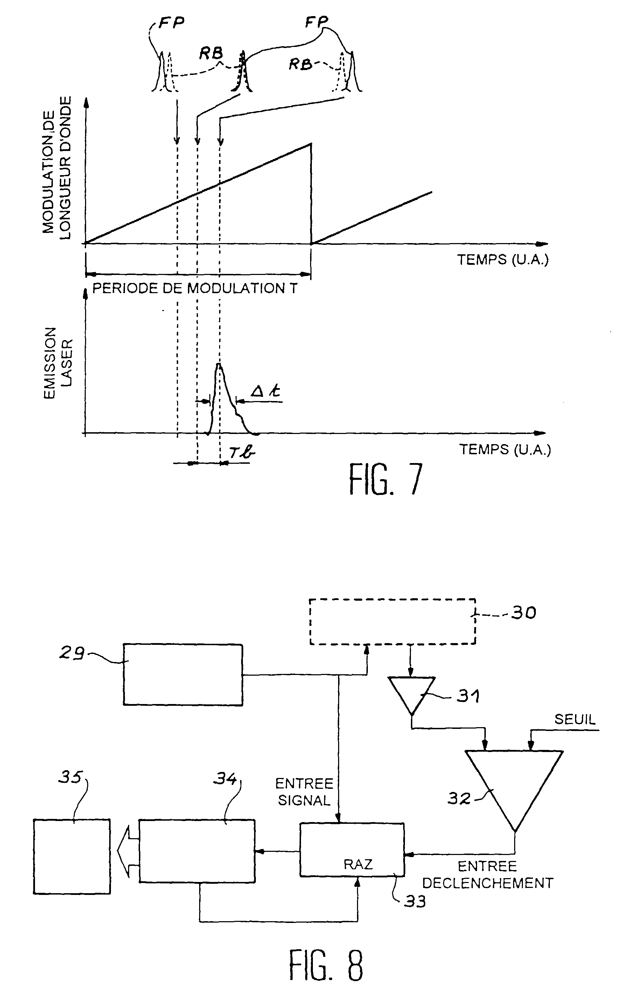

Le dispositif de l'invention est également constitué du coupleur-multiplexeur 23 à fibre (WDM- Wavelength-Division-Multiplexer) conçu pour assurer le couplage du faisceau de pompage issu de la diode laser 22 tout en assurant la transmission du faisceau laser vers la boucle de rétroaction. Ce composant de couplage est disponible commercialement aux trois longueurs d'onde de télécommunication: 830 nm, 1 300 nm et 1 550 nm. Il peut être réalisé -sur commande- à d'autres longueurs d'onde d'intérêt, si nécessaire. La figure 5 illustre un spectre en transmission (par couplage) de ce coupleur-multiplexeur, du port 1 vers le port 4 comme illustré sur la figure 6.

Le principe de l'interrogation sélective des réseaux (diagrammes temporels) est illustré sur la figure 7. Sur cette figure sont représentées des fonctions de transfert spectrales :

- Fabry-Perot : FP ;
- réseau de Bragg : RB.

A mesure que s'accroît la tension de modulation appliquée à la cale en céramique piézo-électrique de l'interféromètre de Fabry-Perot, le pic de réflexion de la boucle de rétroaction se déplace spectralement par extension mécanique du résonateur.

A chaque coïncidence spectrale entre les fonctions de transfert RB du réseau interrogé et la fonction de transfert spectrale FP de l'interféromètre de Fabry-Perot, la résonance laser déclenchée peut se produire. Le début de construction de l'impulsion laser intervient sur le flanc de la fonction de transfert spectrale de l'interféromètre.

Si la coïncidence des deux fonctions de transfert a lieu pendant une durée supérieure au temps de construction de l'impulsion laser, celle-ci peut apparaître. L'onde laser déclenchée apparaît alors légèrement en retard par rapport au moment où les fonctions de transfert se recouvrent. La raison en est que l'impulsion doit d'abord se construire au sein de la cavité laser (formée de la boucle de rétroaction, de la fibre amplificatrice et du bras de mesure portant les réseaux de Bragg photo-inscrits). Pour cela, il lui faut effectuer un ou deux allers-et-retours dans la cavité, ce qui induit un retard correspondant à la propagation de l'onde lumineuse au sein du résonateur. Le signal de déclenchement apparaît donc en retard par rapport au recouvrement spectral. Si la fréquence de modulation reste constante, le retard est constant d'un réseau à un autre et est intrinsèquement pris en compte par le calibrage de la chaîne de mesure. Si la fréquence de modulation n'est pas constante, l'emploi d'un réseau de Bragg de référence non contraint permet alors de s'affranchir du retard.

Le temps de construction de l'impulsion laser s'écrit :

$$T_b \approx \frac{25 \pm 5}{\dfrac{\Delta N_0}{\Delta N_s} - 1} \cdot \tau_R \qquad (1)$$

avec :

$$\frac{\Delta N_0}{\Delta N_s} = \frac{\text{inversion de population '' à vide''}}{\text{inversion de population au seuil}}$$

L'inversion de population "à vide" correspond à l'inversion de population obtenue longtemps après le temps de recouvrement en absence de résonance laser (c'est-à-dire, avant fermeture de la cavité par l'interféromètre de Fabry-Perot). L'inversion de population au seuil correspondant à l'inversion de population qui se maintiendrait si le laser émettait en régime continu dans les conditions de rétroaction fixées par la cavité lorsque l'interféromètre transmet la longueur d'onde sélectionnée.

Il est possible de relier l'inversion de population à la puissance de pompage en régime continu par les équations classiques suivant le type de laser (classés grossièrement en deux catégories : à quatre niveaux ou à trois niveaux, suivant que la relaxation laser s'effectue sur le niveau fondamental (trois niveaux) ou sur un niveau intermédiaire (quatre niveaux)).

Pour un laser à quatre niveaux, l'inversion de population peut s'écrire :

$$\Delta N = \frac{\dfrac{I_p}{I_{sat}} - \exp(-x)}{\dfrac{I_p}{I_{sat}} + 1 + \exp(-x)}$$

où

$$x = \frac{h.v_{12}}{k.T}$$

$h.v_{12}$ étant l'écart énergétique entre le niveau fondamental et le niveau de relaxation laser, et k.T est l'énergie thermique.

Pour un laser à trois niveaux, l'inversion de population peut s'écrire :

$$\Delta N = \frac{\dfrac{I_p}{I_{sat}} - 1}{\dfrac{I_p}{I_{sat}} + 1}$$

Le terme 25±5 de l'équation (1) correspond à une estimation moyenne d'un terme

$$\ln\left(\frac{I_{laser}}{I_{spont}}\right)$$

qui représente physiquement le rapport entre l'intensité laser circulante (dans le résonateur) et l'intensité spontanée (la seule existante avant apparition de l'impulsion). Le terme en logarithme rend le rapport d'un ordre de grandeur constant, de sorte que l'important est de constater que la durée de construction $T_b$ ne dépend que du rapport des inversions de population et de la durée de vie du photon $\tau_R$ (également appelée la durée caractéristique du résonateur laser) qui s'écrit :

$$\tau_R = \frac{\left(\dfrac{2.N.L}{c}\right)}{\ln(R.(1-A))} \approx \frac{2.N.L}{A\,c} \qquad (2)$$

où A est l'absorption interne du résonateur (principalement fixée par les pertes d'insertion de l'interféromètre de Fabry-Perot). R est le coefficient de réflexion de la cavité déterminé par la boucle de rétroaction (proche de 100 %) et la réflexion des réseaux de Bragg (supérieur à 50 % et typiquement proche de 90 % à 95 %). N est l'indice effectif du mode fondamental LP01 et L est la longueur de cavité du laser (correspondant pratiquement à la longueur du bras de mesure).

La durée d'un aller et retour de l'onde laser dans la cavité correspond à

$$\frac{2.N.L.}{c} \,,$$

c étant la vitesse de la lumière dans le vide,

la durée de vie du photon est de l'ordre de une à deux fois cette durée.

Le tableau II mentionne les durées de vie de photon typiques d'une telle cavité pour plusieurs longueurs de fibres. On suppose que la boucle de rétroaction est de quelques dizaines de centimètres de long et qu'elle est donc d'une longueur négligeable devant la distance des réseaux à la boucle.

La largeur temporelle de l'impulsion, quand à elle, s'écrit :

$$\Delta t \approx \tau_R \tag{3}$$

Trois paramètres imposent une limite en cadence de modulation du dispositif (et donc, in fine, son temps de réponse final) : la durée de construction de l'onde laser déclenchée, la durée de recouvrement du matériau amplificateur après chaque impulsion et enfin la durée de conversion analogique-numérique des données échantillonnées.

On va donner un ordre de grandeur pour chacun de ces paramètres afin de déterminer celui qui limite le plus le fonctionnement du dispositif global.

## Limitation par la durée de construction

Sachant que la largeur de raie spectrale $\Delta\lambda$ des réseaux de Bragg photo-inscrits est de l'ordre de quelques Å (quelques 0,1 nm), la condition de construction de l'onde déclenchée est donc :

$$\frac{T_b}{\Delta\lambda} < \frac{T}{\Delta\lambda_u} \tag{4}$$

où $\Delta\lambda_u$ est la largeur de la bande utile de gain du laser (voir la figure 3 et tableau I).

Ainsi, la fréquence de modulation uniquement limitée par le temps de construction est soumise à la condition suivante :

$$f = \frac{1}{T} < f_{max}^{(1)} = \frac{\Delta\lambda}{\Delta\lambda_u} \cdot \frac{1}{T_b} \tag{5}$$

La durée de construction dépend de la distance séparant le réseau de Bragg en contre-réaction de la boucle de rétroaction (c'est-à-dire, pratiquement la longueur de cavité). Ainsi, pour une longueur de cavité de 100 mètres, la durée de construction est de l'ordre de la microseconde et, pour une finesse de résonateur de l'ordre de 1000, la fréquence critique $f_{max}^{(1)}$ de construction se trouve limitée typiquement à des fréquences de quelques kHz à 10 kHz.

Un tableau II en fin de description donne la correspondance entre la distance du réseau de Bragg à la boucle de rétroaction et la durée de vie de photon correspondante. La fréquence de modulation critique induit par la durée de construction (fréquence critique de construction) est également mentionnée.

## Limitation par la durée de recouvrement

Comme indiqué précédemment, un autre paramètre fixe une limite en fréquence de modulation: la durée de recouvrement du gain après chaque impulsion laser déclenchée. Cette durée de recouvrement s'exprime :

$$\tau' = \frac{\tau}{1+\Gamma.\tau} \tag{6}$$

où $\tau$ est la durée de vie du niveau excité de l'ion laser et $\Gamma$ est appelé le taux de pompage tel que :

$$\Gamma \cdot \tau = \frac{I_p}{I_{sat}} \tag{7}$$

où $I_p$ est l'intensité de pompage et $I_{sat}$ est l'intensité de saturation de pompage.

Typiquement: $\Gamma.\tau \approx 1$ à 10 pour des puissances en continu de diodes laser (de l'ordre du mW à 10 mW) et les durées de vie $\tau$ sont de l'ordre de la milliseconde (ion $Yb^{3+}$) à quelques 100 µs (ion $Nd^{3+}$).

Or, la durée séparant deux impulsions successives doit excéder la durée de recouvrement du matériau amplificateur (de l'ordre de 100 µs à 1 ms).

Soit $\Delta$, l'écart spectral entre deux capteurs successifs, la période de modulation T est limitée suivant la relation :

$$\frac{\Delta}{\tau'} > \frac{\Delta\lambda_u}{T} \qquad (8)$$

où $\Delta\lambda_u$ est la largeur de la bande spectrale de gain déjà définie précédemment.

Ainsi la fréquence de modulation $f = \frac{1}{T}$ se trouve soumise à la condition suivante :

$$f < f_{max}^{(2)} = \frac{1}{\tau'} \cdot \frac{\Delta}{\Delta\lambda_u} = \frac{1}{n.\tau'} = \frac{1 + \Gamma.\tau}{n.\tau} \qquad (9)$$

où n est le nombre de capteurs équidistants dans la courbe de gain.

Typiquement : $\tau \approx 1$ ms et la fréquence de modulation critique $f_{max}^{(2)}$ due à la durée de recouvrement est limitée aux alentours de quelques centaines de Hz pour un réseau de 10 à 20 capteurs.

Dans la pratique, une marge de sécurité est adoptée pour assurer un parfait recouvrement du gain. La durée effective de recouvrement est en fait supérieure d'une facteur 3 (environ) au facteur défini en théorie du laser.

La fréquence critique due à la durée de recouvrement du matériau amplificateur $f_{max}^{(2)}$ est plus faible d'environ deux ordres de grandeur que la fréquence critique $f_{max}^{(1)}$ due à la durée de construction de l'impulsion déclenchée. Comme la fréquence de conversion est supérieure à quelques kHz, la fréquence de modulation du système global de démultiplexage est donc limitée par $f_{max}^{(2)}$ (soit de l'ordre de 100 Hz pour un réseau d'une vingtaine de capteurs).

La solution permettant de diminuer la durée de recouvrement consiste à rechercher les ions de plus faibles durées de vie de fluorescence (tout en gardant à l'esprit que plus cette durée de vie est courte, plus la puissance de seuil du laser est importante). L'équation (9) suggère également que la fréquence critique de recouvrement augmente avec la puissance de pompage. La puissance de pompage étant déjà réglée afin d'optimiser la puissance des impulsions tout en évitant un effet laser incontrôlé, celle-ci ne peut pas être augmentée inconsidérément pour diminuer le temps de recouvrement.

Après chaque impulsion laser, le gain de la fibre dopée diminue considérablement. La durée de recouvrement du gain correspond au temps nécessaire pour que le gain retrouve une valeur suffisante pour régénérer une nouvelle impulsion. Typiquement, pour des ions de terres-rares, cette durée de recouvrement est de l'ordre de quelques millisecondes entre chaque capteur (soit quelques dizaines de millisecondes pour dix à vingt capteurs composant la ligne de mesure).

La plupart des convertisseurs analogique-numérique de haute résolution (14 bits) sont caractérisés par des fréquences d'échantillonnage très supérieures au kHz. Ce point n'est donc pas limitatif.

La fréquence de modulation du système global de démultiplexage est donc limitée par la fréquence critique due à la durée de recouvrement (soit de l'ordre de 100 Hz pour un réseau d'une vingtaine de transducteurs). Signalons que la fréquence de modulation de l'interféromètre de Fabry-Perot ("Slew Rate") est très supérieure au kHz.

On va considérer à présent l'instrumentation électronique associée.

La largeur spectrale des réseaux de Bragg photo-inscrits est de l'ordre de l'Å (0,1 nm) et la longueur d'onde porteuse est de l'ordre de 1 000 nm. La résolution recherchée est de l'ordre de 0,01 nm, soit une résolution en déformation

$$\frac{\Delta\ell}{\ell} = \frac{\Delta\lambda}{\lambda} \approx 10^{-5} = 10\mu\varepsilon(1\mu\varepsilon=1\mu m/m)$$

On recherche une résolution de 0,01 nm sur une bande de gain porteuse de 100 nm environ, la résolution relative recherchée est donc de l'ordre de $10^{-4}$.

On peut alors considérer un cas concret, comme illustré en figure 3:

Temps de recouvrement :                                 1 ms
Nombre de capteurs dans la courbe de gain :    20

| | |
|---|---|
| Courbe de gain : | 100 nm (un capteur tous les 5 nm) |
| Durée de balayage : | 60 ms (20 capteurs $\times$ 3 ms) |
| Résolution spectrale recherchée : | $10^{-4}$ |
| Résolution en temps correspondante : | 6 $\mu$s |

Sachant que la largeur temporelle de l'impulsion déclenchée est de l'ordre de la durée de vie du photon (Cf. formule 3 ci-dessus), des cavités de longueurs inférieures à un kilomètre environ confèrent des durées de vie de photon de l'ordre de la microseconde (voir tableau II). La largeur de l'impulsion laser étant donc beaucoup plus faible que la résolution en temps recherchée, celle-ci permet d'obtenir un échantillonnage précis du signal de modulation appliqué au système sélectif de démultiplexage (en l'occurrence, l'interféromètre de Fabry-Perot).

Une méthode de déclenchement par les impulsions est donc suffisamment précise pour l'application recherchée. L'électronique d'acquisition peut ainsi être simple, fiable, utiliser des composants standard et être peu onéreuse. L'impulsion laser déclenchée présente une forte intensité et est donc facile à détecter par une photodiode dont la fréquence de coupure est supérieure à quelques MHz, ce qui est réalisable facilement avec des composants optoélectroniques standard.

Un montage électronique de détection peut employer les impulsions laser transmises par la photodiode rapide (MHz) comme signaux de déclenchement d'un convertisseur analogique-numérique ayant pour fonction de mesurer, au moment déclenché par l'impulsion, la valeur effective de la tension appliquée à l'interféromètre de Fabry-Perot représentative de la longueur d'onde d'accord.

Compte tenu de la résolution envisagée ($10^{-4}$), celle-ci nécessite une conversion analogique-numérique sur au moins 16 000 points, soit au moins 14 bits ($2^{14}$=16 384). De tels convertisseurs existent commercialement en série standard. La vitesse de conversion étant inférieure à quelques ms, celle-ci s'effectue pendant la durée de recouvrement.

Un système électronique d'acquisition séquentielle des longueurs d'onde d'accord de Bragg est illustré en figure 8..

Sur cette figure 8 sont représentés le modulateur 29 et le dispositif optique 30 illustré sur la figure 2 avec une entrée allant vers l'interféromètre Fabry-Perot 20 et une sortie provenant de la photodiode 27. En sortie de ce dispositif 30 sont successivement reliés un amplificateur 31, un comparateur 32, un échantillonneur-bloqueur 33, qui reçoit la sortie du comparateur 32 sur son entrée déclenchement et le signal sortant du modulateur 29 sur son entrée signal. Un convertisseur analogique-numérique (codage sur 14 bits ou plus) 34 relié à un ordinateur 35 est disposé en sortie de cet échantillonneur-bloqueur 33, une remise à zéro de l'échantillonneur-bloqueur 33 ayant lieu dès la fin de conversion.

Le fonctionnement de ce système électronique d'acquisition est le suivant: à mesure que la tension appliquée à l'interféromètre de Fabry-Perot 20 s'accroît, les impulsions laser déclenchées apparaissent. Après seuillage par comparateur 32 (pour éviter tout déclenchement par le bruit), les impulsions émises par le comparateur déclenchent la mise en mémoire, par l'échantillonneur-bloqueur 33, de la tension appliquée à l'interféromètre 20. Cette mise en mémoire est maintenue pendant le temps nécessaire à la conversion 34. Le résultat de la conversion peut être lu à des intervalles de temps réguliers (inférieurs à 1 ms) par l'ordinateur 35 muni d'une interface adaptée.

La méthode d'étalonnage du capteur et de mesure des paramètres (contraintes, température et pression) est connue (voir par exemple la référence [9]).

Une application directe du dispositif de l'invention concerne la mesure de contraintes, pressions ou de températures distribuées en plusieurs localisations d'une structure à surveiller (pont, barrage, aile d'avion en composite, navire, ....).

Plusieurs dizaines de points de mesure peuvent être assurés sur une seule ligne de mesure, multiplexés en longueur d'onde dans toute la bande de gain des lasers à fibre (vitreuse) de plusieurs dizaines de nm de large. La portée de cette ligne de mesure atteint quelques dizaines de mètres, voire plus.

Le dispositif de l'invention résout le problème de la limitation du rapport signal sur bruit des capteurs de contraintes passifs en appliquant un principe de détection en mode impulsionnel. Il résout également le problème de la limitation de capacité du capteur. Ce système résout également le problème de la démodulation spectrale des longueurs d'onde d'accord par un système électronique simple, rapide (100 Hz pour quelques dizaines de capteurs) et peu onéreux car n'impliquant qu'un seul élément sélectif et des composants d'électronique standard.

TABLEAU I

| Ion laser | Bandes de longueurs d'onde de pompage (nm) | Bandes de longueurs d'onde d'émission laser (nm) |
|---|---|---|
| $Yb^{3+}$ | 850 à 920 | 1000 à 1100 |

TABLEAU I   (suite)

| Ion laser | Bandes de longueurs d'onde de pompage (nm) | Bandes de longueurs d'onde d'émission laser (nm) |
|---|---|---|
| $Nd^{3+}$ | 780 à 810<br>850 à 885 et 930 à 940 | 1040 à 1070<br>1350 à 1360 |
| $Tm^{3+}$ | 650 à 675 et 790 à 800 | 1850 à 1950 et 1460 à 1500 et 2300 à 2400 |
| $Pm^{3+}$ | 1000 à 1030 | 1300 à 1310 |
| $Er^{3+}$ | 790 à 810 et 970 à 990 | 1530 à 1570 et 2710 à 2780 |

TABLEAU II

| Distance du réseau à boucle de rétroaction (m) | 1 | 10 | 100 |
|---|---|---|---|
| Durée de vie du photon typique $\tau_R$ (ns) | 10 | 100 | 1000 |
| Fréquence critique de construction (kHz) | 100 | 10 | 1 |

REFERENCES

[1]  **W.W.Morey**
Distributed fiber grating sensors, OFS'90, pp. 285-288

[2]  **W.W. Morey,** UNITED TECHNOLOGY CORPORATION (USA)
Distributed multiplexed optical fiber Bragg grating sensor arrangement - US 91/4, 996, 419

**D.R. Lyons and S.M. Reich,** GRUMMAN AEROSPACE CORPORATION (USA)
Optical electronic multiplexing reflection sensor system - US 93/5, 191,458

[3]  **A.D. Kersey and W.W. Morey**
Multi-element Bragg-grating based fibre-laser strain sensor
Electr. Lett., vol. 29, n° 11, 1993, pp. 964-966

[4]  All-Fiber Fabry-Perot Scanning Interferometer FFP SI
Micron Optics, Inc. 2801 Buford Hwy, Ste 140
Atlanta, Georgia 30329

[5]  **C.M. Miller**
Low-loss cascaded fiber Fabry-Perot with finesse greater than 3500 ECOC-IOOC'91, Paris, paper TuB3-2

[6]  **D.B. Mortimore**
Fiber loop reflectors
J. of Light. Tech., vol. 6, n° 7, 1988, pp. 1217-1224

[7]  **K.O. Hill, D.C. Johnson, F. Bilodeau and S. Faucher**
Narrow-bandwidth optical waveguide transmission filters
Electr. Lett., vol. 23, n° 9, 1987, pp. 465-466

[8]  **M. Digonnet and H.J. Shaw**
Wavelength multiplexing in single-mode fiber couplers
Appl. Opt., vol. 22, n° 3, 1983, pp. 484-491

[9]  **P. Ferdinand et al.,** OFS'94, 11-13 Oct. 94, Glasgow, pp. 162-166

REFERENCES ANNEXES CONCERNANT L'INSCRIPTION DE RESEAUX DE BRAGG PHOTO-INSCRITS

Publications :
**G. Meltz, W.W. Morey and W.H. Glenn**
Formation of Bragg gratings in optical fibers by a transverse holographic method
Opt. Lett., vol. 14, n° 15, 1989, p. 823-825
Brevets :
**W.H. Glenn, G. Meltz and E. Snitzer,** UNITED TECHNOLOGY CORPORATION (USA)
Method for impressing gratings within fiber optics - WO 86/01303

**Revendications**

**1.** Dispositif capteur à fort rapport signal-sur-bruit, comprenant au moins un transducteur (25) à réseau de Bragg photo-inscrit sur un guide diélectrique (26), une boucle de rétroaction incluant un élément sélectif (20) en longueur d'onde, modulé temporellement, permettant de réaliser un capteur laser déclenché, et un dispositif d'acquisition-échantillonnage (28), caractérisé en ce que la boucle de rétroaction est constituée d'un interféromètre de Sagnac de type équilibré de sorte qu'il se comporte comme un réflecteur à fibre.

**2.** Dispositif capteur à grande capacité selon la revendication 1, caractérisé en ce qu'il comporte plus d'un transducteur à réseau de Bragg (25) à des longueurs d'onde caractéristiques différentes contenues dans la bande spectrale de gain du matériau amplificateur, et que le démultiplexage de ces transducteurs (25) ainsi que la mesure de leurs longueurs d'onde caractéristiques sont toutes deux obtenues par le déclenchement laser sélectif engendrant une succession d'impulsions laser de façon séquentielle.

**3.** Dispositif selon l'une au moins des revendications 1 et 2, caractérisé en ce que l'élément sélectif en longueur d'onde est un interféromètre de Fabry-Perot accordable (20) dont l'intervalle spectral libre est supérieur à la largeur utile de la courbe de gain, qui correspond à la bande spectrale de gain du matériau amplificateur suffisante pour déclencher l'effet laser.

**4.** Dispositif selon l'une au moins des revendications 1 à 3, caractérisé en ce qu'il est intégré sous forme "compatible fibre".

**5.** Dispositif selon l'une quelconque des revendications 2 à 4, caractérisé en ce qu'il comprend un coupleur-multiplexeur (23), relié en entrée à une diode laser de pompage (22), et à une sortie d'un coupleur 50 % ajustable (21), dont les deux entrées sont connectées à un interféromètre de Fabry-Perot accordable (20), en ce que des réseaux de Bragg (25) sont photo-inscrits sur une fibre (26) soudée à une fibre dopée (24) reliée au coupleur-multiplexeur (23), celle-ci se terminant par la fibre (26) non réflectrice, en ce qu'un modulateur (29) est relié d'une part à l'interféromètre (20) et à un dispositif d'acquisition-échantillonnage (28), délivrant un signal de sortie parallèle (SP) correspondant aux valeurs de longueurs d'onde d'accord, et en ce qu'une photodiode (27) recevant le signal laser déclenché est également connectée à ce dispositif d'acquisition-échantillonnage (28).

**6.** Dispositif selon la revendication 5, caractérisé en ce que la fibre non réflectrice (26) se termine par un biseau ou un dépôt antireflet.

**7.** Dispositif selon la revendication 5, caractérisé en ce que le coupleur-multiplexeur (23) est un coupleur-multiplexeur à fibre conçu pour assurer le couplage du faisceau de pompage issu de la diode laser (22) tout en assurant la transmission du faisceau laser vers la boucle de rétroaction.

**8.** Dispositif selon la revendication 5, caractérisé en ce que la fibre dopée (24) est dopée avec des ions de terres-rares.

**9.** Dispositif selon la revendication 5, caractérisé en ce qu'il comprend un système électronique d'acquisition séquentielle des longueurs d'onde d'accord de Bragg.

**10.** Dispositif selon la revendication 9, caractérisé en ce que ce système électronique d'acquisition comprend un amplificateur (31), relié à la photodiode (27), suivi d'un comparateur (32), un échantillonneur-bloqueur (33) qui reçoit la sortie du comparateur (32) sur son entrée déclenchement et le signal sortant du modulateur (29) sur son entrée signal, en ce qu'un convertisseur analogique-numérique de codage supérieur ou égal à 14 bits (34) relié à un ordinateur (35) est disposé en sortie de cet échantillonneur-bloqueur (33), une remise à zéro de l'échantillonneur-bloqueur (33) ayant lieu dès la fin de conversion.

11. Dispositif selon l'une quelconque des revendications précédentes, caractérisé en ce qu'il est utilisé pour la surveillance de contraintes dans une structure.

12. Dispositif selon l'une quelconque des revendications 1 à 10, caractérisé en ce qu'il est utilisé pour la surveillance de températures dans une structure.

**Patentansprüche**

1. Sensorvorrichtung mit großem Signal-Rauschverhältnis, wenigstens einen Transducer (25), mit photoinduziertem Bragg-Gitter auf einem dielektrischen Leiter (26) und einer Rückkopplungsschleife mit einem zeitmodulierten wellenlängen-selektiven Element (20) zum Realisieren eines gütegeschalteten Lasersensors, und eine Erfassungs-Abtastvorrichtung umfassend,
**dadurch gekennzeichnet**,
dass die Rückkopplungsschleife durch ein Sagnac-Interferometer gebildet wird, das so abgeglichen ist, dass es sich wie ein Faserreflektor verhält.

2. Sensorvorrichtung nach Anspruch 1, dadurch gekennzeichnet, dass sie mehr als einen Bragg-Gitter-Transducer (25) mit verschiedenen im Verstärkungsspektralbereich des Verstärkermaterials enthaltenen charakteristischen Wellenlängen umfasst, und dass sowohl das Demultiplexieren dieser Transducer (25) als auch das Messen ihrer charakteristischen Wellenlängen durch das selektive Güteschalten bzw. Auskoppeln erzielt wird, das in sequentieller Weise eine Folge von Laserimpulsen erzeugt.

3. Sensorvorrichtung nach wenigstens einem der Ansprüche 1 und 2, dadurch gekennzeichnet, dass das wellenlängenselektive Element ein abstimmbares Fabry-Perot-Interferometer (20) ist, dessen freies Spektralintervall größer ist als die nützliche Breite der Verstärkungskurve, die dem zum Auslösen des Lasereffekts ausreichenden Verstärkungsspektralbereich des Verstärkungsmaterials entspricht.

4. Sensorvorrichtung nach wenigstens einem der Ansprüche 1 bis 3, dadurch gekennzeichnet, dass sie in "faserkompatibler" Form integriert ist.

5. Sensorvorrichtung nach wenigstens einem der Ansprüche 2 bis 4, dadurch gekennzeichnet, dass sie einen Koppler-Multiplexer (23) umfasst, als Eingang mit einer Laserpumpdiode (22) und mit einem Ausgang eines 50% abstimmbaren Kopplers (21) verbunden, dessen beiden Eingänge an ein abstimmbares Fabry-Perot-Interferometer (20) angeschlossen sind, dass Bragg-Gitter (25) in eine Faser (26) photoinduziert werden, die mit einer mit dem Koppler-Multiplexer verbundenen dotierten Faser (24) verschweißt ist, wobei diese durch die nichtreflektierende Faser (26) endet, dass einerseits ein Modulator (29) mit dem Interferometer (20) und mit einer Erfassungs-Abtastvorrichtung (28) verbunden ist, die ein paralleles Ausgangssignal (SP) liefert, das den Abstimmungswellenlängen entspricht, und dass eine Photodiode (27), die das gütegeschaltete bzw. ausgekoppelte Lasersignal empfängt, ebenfalls mit dieser Erfassungs-Abtastvorrichtung (28) verbunden ist.

6. Vorrichtung nach Anspruch 5, dadurch gekennzeichnet, dass die. nichtreflektierende Faser (26) mit einer Schräge oder einer Antireflex-Schicht endet.

7. Vorrichtung nach Anspruch 5, dadurch gekennzeichnet, dass der Koppler-Multiplexer (23) ein Faser-Koppler-Multiplexer ist, der den von der Laserdiode (22) stammenden Pumpstrahl einkoppelt und dabei die Transmission des Laserstrahls in Richtung Verzögerungsschleife gewährleistet.

8. Vorrichtung nach Anspruch 5, dadurch gekennzeichnet, dass die dotierte Faser (24) mit Selten-Erden-Ionen dotiert ist.

9. Vorrichtung nach Anspruch 5, dadurch gekennzeichnet, dass sie ein sequentielles elektronisches Erfassungssystem der Bragg-Abstimmungswellenlängen umfasst.

10. Vorrichtung nach Anspruch 9, dadurch gekennzeichnet, dass das elektronische Erfassungssystem einen mit der

**13**

Photodiode (27) verbundenen Verstärker (31) umfasst, gefolgt von einem Komparator (32) und einer Abtast- und Halteschaltung (33), die den Ausgang des Komparators (32) auf ihrem Auslösungseingang erhält und das Ausgangssignal des Modulators (29) auf ihrem Signaleingang, dass ein Codierungs-Analog-Digitalumsetzer größer oder gleich 14 Bit (34), verbunden mit einem Computer (35), am Ausgang dieser Abtast-Halteschaltung (33) angeordnet ist, wobei eine Nullstellung der Abtast-Halteschaltung (33) am Ende der Umsetzung stattfindet.

**11.** Vorrichtung nach einem der vorhergehenden Ansprüche, dadurch gekennzeichnet, dass sie zur Überwachung von Spannungen in einer Struktur benutzt wird.

**12.** Vorrichtung nach einem der Ansprüche 1 bis 10, dadurch gekennzeichnet, dass sie zur Überwachung von Temperaturen in einer Struktur benutzt wird.

**Claims**

**1.** Sensor device having a high signal-to-noise ratio, comprising at least one Bragg grating transducer (25) photoinscribed on a dielectric guide (26), a feedback loop including a time modulated, wavelength selective element (20) making it possible to implement a switched laser sensor, and an acquisition-sampling device (28), characterized in that the feedback loop is constituted by a balanced Sagnac interferometer, so that it behaves like a fibre reflector.

**2.** High capacity sensor device according to claim 1, characterized in that it also has a Bragg grating transducer (25) with different characteristic wavelengths contained in the gain spectral band of the amplifier material and that the demultiplexing of these transducers (25), as well as the measurement of their characteristic wavelengths are both obtained by selective laser switching producing sequentially a laser pulse succession.

**3.** Device according to at least one of the claims 1 and 2, characterized in that the wavelength selective element is a tunable Fabry-Perot interferometer (20), whose free spectral range exceeds the useful gain curve width, which corresponds to the spectral gain band of the amplifier material sufficient to switch the laser effect.

**4.** Device according to at least one of the claims 1 to 3, characterized in that it is integrated in "compatible fibre" form.

**5.** Device according to any one of the claims 2 to 4, characterized in that it comprises a coupler-multiplexer (23), connected at the input to a laser pumping diode (22) and to an output of a 50% adjustable coupler (21), whose two inputs are connected to a tunable Fabry-Perot interferometer (20), that the Bragg gratings (25) are photoinscribed on a fibre (26) welded to a doped fibre (24) connected to the coupler-multiplexer (23), which is terminated by the non-reflecting fibre (26), that a modulator (29) is connected on the one hand to the interferometer (20) and to an acquisition-sampling device (28) supplying a parallel output signal (SP) corresponding to the tuning wavelength values and that a photodiode (27) receiving the switched laser signal is also connected to said acquisition-sampling device (28).

**6.** Device according to claim 5, characterized in that the non-reflecting fibre (26) is terminated by a bevel or an antireflection deposit.

**7.** Device according to claim 5, characterized in that the coupler-multiplexer (23) is a fibre coupler-multiplexer designed to ensure the coupling of the pumping beam from the laser diode (22), whilst also ensuring the transmission of the laser beam to the feedback loop.

**8.** Device according to claim 5, characterized in that the doped fibre (24) is doped with rare earth ions.

**9.** Device according to claim 5, characterized in that it comprises an electronic system for the sequential acquisition of the Bragg tuning wavelengths.

**10.** Device according to claim 9, characterized in that said electronic acquisition system comprises an amplifier (31) connected to the photodiode (27), followed by a comparator (32), a sample and hold circuit (33), which receives the output of the comparator (32) on its switching input and the signal from the modulator (29) on its signal input, that an analog-digital converter of coding equal to or above 14 bits (34) connected to a computer (35) is located at the output of said sample and hold circuit (33) and a resetting of the sample and hold circuit (33) takes place at the end of conversion.

11. Device according to any one of the preceding claims, characterized in that it is used for monitoring strains in a structure.

12. Device according to any one of the claims 1 to 10, characterized in that it is used for monitoring temperatures in a structure.

EP 0 729 012 B1

FIG. 1

FIG. 2

FIG. 3

FIG. 4

FIG. 6

FIG. 5

FIG. 7

FIG. 8